# EUROPEAN PATENT APPLICATION

(11) **EP 2 186 401 A1**
(43) Date of publication of application: **19.05.2010**
(21) Application number: 09175112.3
(22) Date of filing: 05.11.2009
(51) Int. Cl.: A01K 13/00

(54) **Perfected horse's boot**

(30) Priority: 07.11.2008 IT VI20080044 U
(71) Applicant: Veredus S.R.L., 31010 Monfumo (IT)
(72) Inventor: Menegon, Paolo, 31010, Monfumo (TV) (IT)
(74) Representative: Bonini, Ercole

(57) **Abstract**

A leg guard (1) for horses comprising: an elastically yielding thin member (2) designed to be wrapped around the lower leg (3) of the horse, with a contact surface (4) that is positioned up against the lower leg (3); a shaped, shockproof shell (5), associated with the thin member (2) on the side opposite said contact surface (4); closing means (6) designed to tighten the thin member (2) around the lower leg (3) when the leg guard (1) is in use. The thin member (2) comprises a first flap (2a) that extends from the shaped shell (5) in the direction in which the thin member (2) is wrapped around the lower leg (3). The closing means (6) comprise removable connection means (7) between the first flap (2a) extending from the thin member (2) and the shaped shell (5).

## Description

The present invention relates to a leg guard for horses, of the type generally used to protect the rear portion of the horse's lower leg against impact injuries, and particularly those caused by the horse's other hoofs when it is running and jumping.

The leg guards of known type generally comprise an elastically yielding thin member for wrapping around the horse's lower leg, with connection means for attaching it to the lower leg when in use.

According to a known embodiment, such a leg guard also comprises a shaped, shockproof shell associated with the outer surface of the thin member and stiff enough to protect the rear portion of the animal's lower leg against impact injuries from its other hoofs.

The leg guard is also fitted with elastic straps that are tied together to close the thin member around the horse's lower leg when in use, so as to keep it in position.

In the leg guards of the type described above the elastic straps are deformable and consequently hang down from the thin member when they are not tied.

This means that, in order to fit the leg guard around the horse's lower leg, the operator has to hold the leg guard in position while simultaneously taking hold of the straps and bringing them into the closed configuration.

It is easy to see that the leg guards of the above-described, known type consequently pose the drawback of being troublesome to attach.

This leads to another drawback, i.e. that the leg guard may not be fitted properly, thus remaining unstable and failing as a result to adequately protect the animal's lower leg.

The present invention aims to overcome the above-described drawbacks.

In particular, one object of the present invention is to provide a leg guard for horses that is more comfortable to wear than the leg guards of known type.

Another object of the invention is to provide a leg guard that is more stable once it has been fitted.

The above-stated objects are achieved by a leg guard for horses according to the main claim.

Further detailed characteristics of the leg guard according to the invention are explained in the corresponding dependent claims.

The leg guard according to the invention comprises an elastically yielding thin member, with a shaped shockproof shell coupled thereto.

The thin member comprises a first flap extending from the shaped shell in the direction in which the thin member is wrapped around the lower leg.

Closing means are provided to enable said first flap to be removably connected to the shaped shell.

The above-described closing means advantageously enable the elasticity of the first flap to be exploited to effectively tighten the leg guard around the lower leg, instead of using the elastic straps employed in the leg guards of known type.

Thus, the elastic straps can be advantageously replaced by stiff closing means that do not hang down while the leg guard is being fitted, and that are consequently easier to close than those of the known leg guards.

Another advantage lies in that the absence of any elastic portion in the closing means enables the latter to be manufactured in a single piece and consequently in a more straightforward manner compared to those used for the leg guards of known type.

As a consequence, the manufacturing process of the leg guard of the invention is more straightforward than that of the known leg guards.

In addition, the above-mentioned elasticity advantageously enables an optimal adaptation of the leg guard to differently shaped legs.

Another advantage lies in that the first flap distributes the tension of the closing means along the full length of the leg guard, making the latter more stable than the known leg guards, wherein the tension is concentrated essentially at the level of the elastic straps.

The above-mentioned distribution of the tension also advantageously makes the leg guard more comfortable for the horse to wear.

Another advantage lies in that the stiff closing means give the leg guard of the invention a professional appearance, and this makes it more attractive to the market.

The above-mentioned objects and advantages are better clarified in the description of a preferred embodiment of the invention, given as a non-limiting example with reference to the attached drawings, wherein:
- Figure 1 shows the leg guard carried out according to the invention, closed around the horse's lower leg when in use;
- Figure 2 shows the leg guard of Figure 1 in the open configuration.

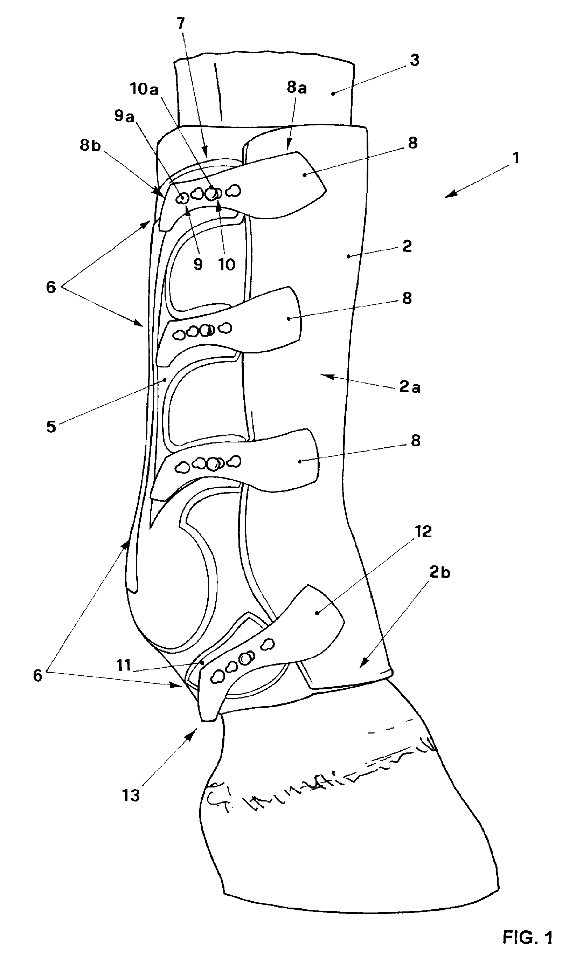

The leg guard according to the invention, shown in Figure 1 and therein indicated as a whole by the numeral **1**, comprises an elastically yielding thin member **2** designed to be wrapped around the lower leg **3** of a horse.

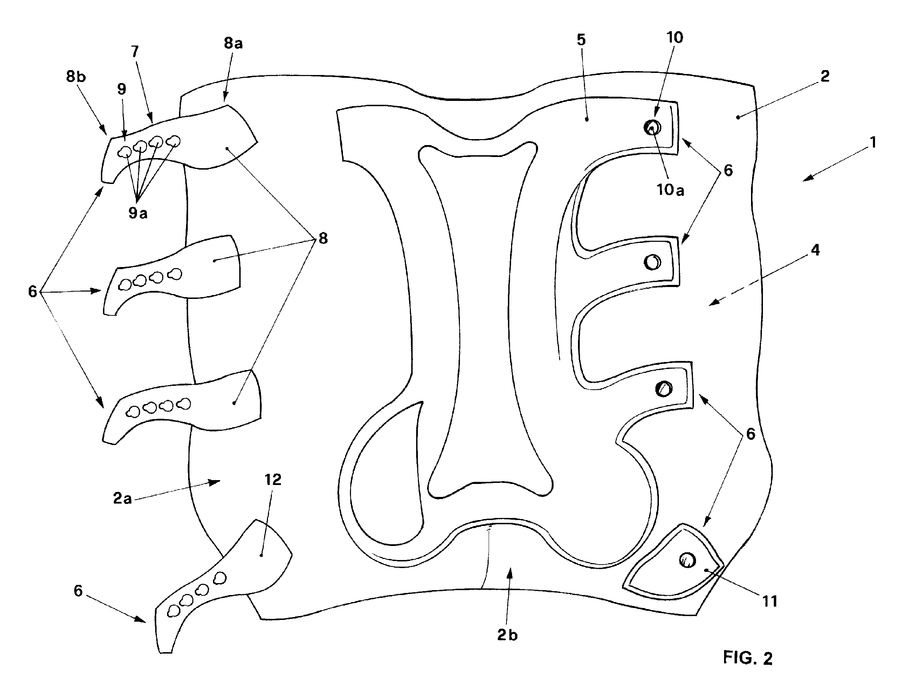

The thin member **2** has a contact surface **4** that, when in use, comes up against the animal's lower leg **3** and that is shown in the through view of Figure 2.

There is also a shaped shell **5,** stiff enough to protect the animal's lower leg **3** against impact injuries, that is associated with the surface of the thin member **2** on the opposite side to the above-mentioned contact surface **4.**

The shaped shell **5** is preferably, but not necessarily, made of a plastic material, possibly reinforced with composite materials such as carbon fibres or other materials of comparable stiffness.

The thin member **2** is preferably made of rubber, such as neoprene or any other elastically yielding rubber.

The leg guard **1** is further fitted with means **6** for closing the thin member **2,** enabling it to be wrapped around the animal's lower leg **3** and to keep it in position during use of the leg guard **1**.

The thin member **2** comprises a first flap **2a** that extends from the shaped shell **5** in the direction in which the thin member **2** is wrapped around the lower leg **3,** as also shown in Figure **2**.

According to the invention, the closing means **6** comprise removable connection means **7** between the aforesaid first flap **2a** and the shaped shell **5.** The removable connection means **7** enable the elasticity of the first flap **2a** to be exploited when the leg guard **1** is wrapped around the lower leg **3,** in the configuration shown in Figure 1.

This makes it unnecessary to provide elastic closing means, such as the elastic straps used in the previously-described leg guards of known type, for instance.

In fact, this solution enables the use of stiff closing means **6,** which achieve the purpose of making it easier to fit the leg guard **1.**

As shown in Figure 2, in fact, the stiff closing means **6** are always in a position ready for closure, unlike the elastic straps, which hang loose when open.

The closing means **6** preferably comprise a plurality of first shaped tabs **8,** each one of which comprises a first end **8a** fixedly attached to the thin member **2**, and a loose opposite end.

The loose end **8b** of each first tab **8** supports a first hooking element **9** suited to be connected to a corresponding second hooking element **10**, the latter being associated with the shaped shell **5** on the side opposite the first flap **2a**.

The first hooking element **9** preferably comprises a plurality of holes 9a provided on the corresponding shaped tab **8,** aligned in the longitudinal direction along the tab **8**.

The presence of several holes **9a** advantageously enables the closing position of the thin member **2** to be adjusted to suit different leg shapes.

The second hooking element **10** is preferably a shaped pin **10a** designed to engage in the holes **9a** provided in the corresponding tab **8.**

Clearly, other embodiments of the invention, not shown herein, may include first hooking elements **9** in the shape of pins and second hooking elements **10** in the shape of holes suitable for containing said pins.

Obviously, the above-described first shaped tabs **8** may be in any number, which may differ from the number shown in the drawings, and may even be only one.

It is nonetheless preferable to use two or more tabs **8** in order to advantageously distribute the tension of the first flap **2a** over the full length of the leg guard **1**, thereby ensuring a better fit of the leg guard **1** to the lower leg **3** and a greater degree of comfort for the horse.

Moreover, the distribution of the tension over the full length of the leg guard **1** advantageously enables better adaptation of the leg guard **1** to differently shaped lower legs **3.**

The thin member **2** preferably, but not necessarily, further comprises a second flap **2b** extending downwards from the shaped shell **5**, as shown in Figure 2.

When the leg guard **1** is fitted, said second flap **2b** is positioned in contact with the recess **13** of the horse's pastern, as shown in Figure 1, so as to improve the vertical stability of the leg guard **1**.

The closing means **6** preferably also comprise an anchoring plate **11** associated with the second flap **2b**, designed to be removably connected with a second shaped tab **12** associated with the first flap **2a.**

This connection may be carried out, for instance, by means of holes and shaped pins similar to those described previously, or of any other equivalent anchoring means.

The connection between the second shaped tab **12** and the anchoring plate **11** advantageously brings tension to bear on the second flap **2b** too, so as to enable the latter's adaptation to the morphology of different legs.

The anchoring plate **11** is preferably separated from the shaped shell **5**, so as to enhance the ability of the leg guard to adapt to the horse's leg.

It is obvious, however, that in different embodiments of the invention the anchoring plate **11** can be permanently associated with the shaped shell **5,** also in a single body, which makes the whole easier to construct.

The shaped tabs **8, 12** are preferably made of plastic, e.g. of the same material used for the shaped shell **5.**

It is preferable to use the same material to make the shaped shell **5** and the tabs **8, 12,** in order to simplify the process for manufacturing the leg guard **1**.

In practice, the leg guard **1** is positioned with its contact surface **4** up against the rear portion of the horse's lower leg **3.**

The thin member **2** is then wrapped around the lower leg **3**, overlapping the first flap **2** over the opposite flap so as to bring the shaped tabs **8, 12** at the same level as the corresponding shaped pins **10a.**

Thanks to the elasticity of the first flap **2a,** each shaped tab can then be pulled until one of the holes **9a** coincides with the corresponding shaped pin 10a, in such a way as to tighten the leg guard 1 to suit the shape of the animals' leg and the degree of closing tension required.

In particular, the second shaped tab **12** allows an optimal coupling of the leg guard **1** to be achieved even in the area around the pastern **13.**

In the light of the above, it is easy to see that the leg guard of the invention achieves the previously-stated objects.

In fact, the coupling of the closing means to the first flap enables the elasticity of the latter to be exploited, thereby enabling the use of stiff closing means that are easier to close than the elastic closing means used in the leg guards of known type.

Moreover, since the closing tension is distributed in the first flap over the full length of the lower leg, this ensures more effective adhesion of the leg guard to the animal's lower leg.

In the construction stage, the leg guard forming the object of the invention may undergo further modifications or variants that, should they come within the scope of the following claims, shall be deemed all protected by the present patent even though they are not described herein, nor shown in the attached drawings.

In the cases where the technical characteristics illustrated in the claims are followed by references, these have been added only with the aim to facilitate the comprehension of the claims themselves and therefore said references do not have any limiting effect on the degree of protection to be granted to each element they identify only by way of example.

## Claims

1. Leg guard (1) for horses comprising:
- an elastically yielding thin member (2) designed to be wrapped around the lower leg (3) of a horse, with a contact surface (4) that is placed up against said lower leg (3);
- a shaped shockproof shell (5), associated with said thin member (2) on the surface opposite to said contact surface (4);
- closing means (6) designed to tighten said thin member (2) around said lower leg (3) when said leg guard (1) is in use;
said thin member (2) comprising at least one first flap (2a) extending, in relation to said shaped shell (5), in the direction in which said thin member (2) is wrapped around said lower leg (3), **characterised in that** said closing means (6) comprise removable connection means (7) between said first flap (2a) extending from said thin member (2) and said shaped shell (5).

2. Leg guard (1) according to claim 1), **characterised in that** said removable connection means (7) comprise a first shaped tab (8) with a first end (8a) fixedly connected to said first flap (2a) and a loose opposite end (8b).

3. Leg guard (1) according to claim 2), **characterised in that** it comprises a first hooking element (9) associated with said loose end (8b) of said first shaped tab (8), suited to be connected to a corresponding second hooking element (10) associated with said shaped shell (5) on the opposite side to said first flap (2a).

4. Leg guard (1) according to claim 3), **characterised in that** said first hooking element (9) is a hole (9a), and said second hooking element (10) is a shaped pin (10a) designed to engage in said hole (9a).

5. Leg guard (1) according to claim 4), **characterised in that** said first shaped tab (8) comprises a plurality of said holes (9a), aligned longitudinally along said first shaped tab (9).

6. Leg guard according to claim 3), **characterised in that** said first hooking element (9) is a shaped pin, and said second hooking element (10) is a hole designed to contain said shaped pin.

7. Leg guard (1) according to any one of the claims from 2) to 6), **characterised in that** it comprises a plurality of said first shaped tabs (8), each fitted with said first hooking element (9) suited to be associated with a corresponding second hooking element (10).

8. Leg guard (1) according to any one of the previous claims, **characterised in that** said thin member (2) comprises a second flap (2b) extending downwards from said shaped shell (5).

9. Leg guard (1) according to claim 8), **characterised in that** said closing means (6) comprise an anchoring plate (11) associated with said second flap (2b), designed to contain the removable connection of a second shaped tab (12) associated with said first flap (2a).

10. Leg guard (1) according to any one of the claims from 2) to 9), **characterised in that** said shaped tabs (8, 12) are made of plastic.

11. Leg guard (1) according to any one of the previous claims, **characterised in that** said thin member (2) is made of neoprene.

12. Leg guard (1) according to any one of the previous claims, **characterised in that** said shaped shell (5) is made of plastic.
